# EUROPÄISCHE PATENTSCHRIFT

(11) **EP 1 382 512 B1**
(45) Veröffentlichungstag und Bekanntmachung des Hinweises auf die Patenterteilung: **08.11.2006**
(21) Anmeldenummer: 03013086.8
(22) Anmeldetag: 11.06.2003
(51) Int. Cl.: B62D 21/17, B62D 25/20

(54) **Luftleitanordnung für den Unterbereich eines Fahrzeuges**
Arrangement of air ducts in the bottom part of a vehicle
Arrangement de conduits d'air pour un plancher de véhicule

(30) Priorität: 19.07.2002 DE 10232807
(43) Veröffentlichungstag der Anmeldung: 21.01.2004
(73) Patentinhaber: Bayerische Motoren Werke Aktiengesellschaft, 80809 München (DE)
(72) Erfinder: Schmidt-Troje, Dieter, 85748 Garching (DE); Sauer, Jürgen, Dr., 80797 München (DE)

(56) Entgegenhaltungen:
- FR-A- 2 076 463
- GB-A- 816 634
- US-A1- 2003 038 470

## Beschreibung

Die vorliegende Erfindung betrifft eine Luftleitanordnung gemäß Patentanspruch 1 sowie ein Fahrzeug mit einer solchen Luftleitanordnung gemäß Patentanspruch 18.

Aus der FR 2 076 463 ist eine Heizeinrichtung zur Beheizung des Fahrgastraums eines Fahrzeugs gemäß dem Oberbegriff des Anspruchs 1 bekannt.

Bei heutigen Pkw's strömt der Fahrtwind ungeführt am Unterboden des Fahrzeugs entlang. Der Fahrtwind strömt dabei auch weitgehend ungelenkt am Getriebe und am Hinterachsgetriebe des Fahrzeugs entlang. Diese "Unterbodenluftströmung" führt zu einem konvektiven Wärmeübergang vom Getriebe an die Umgebung. Die Unterbodenluftströmung führt insbesondere bei niedrigen Außentemperaturen dazu, dass sich die "Warmlaufphase" des kalten Getriebes deutlich verlängert. Das Getriebe arbeitet somit längere Zeit bei einer relativ niedrigen Getriebeöltemperatur, was zu erhöhten mechanischen Verlusten und Verschleiß im Getriebe führt.

Bei höheren Umgebungstemperaturen hingegen kann eine andere Problematik auftreten. Das Hinterachsgetriebe ist bei vielen Fahrzeugen sehr nahe an Komponenten der Abgasanlage, die auch im Normalbetrieb üblicherweise sehr heiß werden. Dies führt zu einer Beaufschlagung des Getriebes mit heißer Luft. Die Aufheizung der Luft resultiert aus der Umströmung der Abgasanlage und führt dann zu einer Verringerung der Wärmeabgabe vom

Getriebe an die Umgebung. Dies führt zu einer zusätzlichen Aufheizung des Getriebeöls. Im Extremfall kann ein Überschreiten der maximal zulässigen Getriebeöltemperatur auftreten.

Aufgabe der Erfindung ist es, den Unterbodenbereich von Fahrzeugen so zu gestalten, dass durch die Unterbodenluftströmung weder eine Überhitzung noch eine Unterkühlung einzelner Fahrzeugkomponenten auftritt.

Diese Aufgabe wird durch die Merkmale der Patentansprüche 1 und 18 gelöst. Vorteilhafte Ausgestaltungen und Weiterbildungen der Erfindung sind den Unteransprüchen zu entnehmen.

Das Grundprinzip der Erfindung besteht darin, im Unterbodenbereich des Fahrzeugs eine Luftleitanordnung vorzusehen, die einen Heizkanal und einen Kühlkanal aufweist. Im Heizkanal strömt warme bzw. erhitzte Luft, die durch die Abwärme des Motors und/oder durch die Abwärme der Abgasanlage erwärmt ist. Im Kühlkanal strömt kühle Umgebungsluft. Die Luftleitanordnung weist ein Luftleitelement auf, das derart angeordnet ist, dass wahlweise heiße Luft aus dem Heizkanal bzw. kühle Luft aus dem Kühlkanal auf eine Fahrzeugkomponenten, wie zum Beispiel ein Getriebe, insbesondere ein Hinterachsgetriebe lenkbar ist, wobei die Fahrzeugkomponente in Abhängigkeit von ihrer Betriebstemperatur zu kühlen oder zu heizen ist. Vorzugsweise weist die Luftleitanordnung ein Stellelement auf, mit dem wahlweise der Heizkanal oder Kühlkanal gegenüber der Luftleiteinrichtung und somit gegenüber der zu heizenden bzw. zu kühlenden Fahrzeugkomponente absperrbar ist.

Nach einer Weiterbildung der Erfindung ist eine Regelelektronik vorgesehen, welche die Betriebstemperatur der von der Luftleitanordnung angeströmten Fahrzeugkomponente, zum Beispiel des Hinterachsgetriebes, misst und in Abhängigkeit davon die Stellung des Stellelements regelt. In Abhängigkeit von der Stellung des Stellelements kann die Wärmabgabe bzw. Wärmezufuhr von der betrachteten Fahrzeugkomponente an die Umgebung gezielt beeinflusst werden. Wenn die Fahrzeugkomponente mit warmer Luft aus dem Heizkanal umströmt wird, ist der Wärmestrom an die Umgebung geringer als bei einer Umströmung mit kalter Luft aus dem Kühlkanal.

In der Startphase des Fahrzeugs kann bei kaltem Hinterachsgetriebe das Hinterachsgetriebe gezielt mit warmer Luft umströmt werden. Dies führt zu einer schnelleren Erreichung der optimalen Betriebstemperatur des Hinterachsgetriebeöls. Nach Erreichen der optimalen Betriebstemperatur kann das Hinterachsgetriebe mit kühler Luft umströmt werden, was eine weitere Aufheizung und ein Überschreiten der maximal zulässigen Getriebeöltemperatur verhindert.

Nach einer Weiterbildung der Erfindung sind der Heizkanal und der Kühlkanal durch eine Trennwand voneinander getrennt. Es kann vorgesehen sein, dass sich einer der beiden Kanäle, zum Beispiel der Kühlkanal, im Querschnitt gesehen um einen Teil des Umfangs des anderen Kanals herum erstreckt.

Vorzugsweise hat der Kühlkanal im Querschnitt gesehen die Form eines "U". Der Heizkanal kann im Querschnitt gesehen in kompakter Weise zwischen den beiden "Schenkeln" des Kühlkanals angeordnet sein.

Nach einer Weiterbildung der Erfindung weist der Heizkanal einen Auslass zur Umgebung hin auf. Der Auslass zur Umgebung hin ist zumindest dann offen, wenn der Heizkanal durch das Stellelement gegenüber der Luftleiteinrichtung abgesperrt ist, das heißt, wenn sich die Luftleitanordnung im "Kühlbetrieb" befindet.

Das Stellelement kann zusätzlich zu den beiden Öffnungs- bzw. Schließstellungen eine oder mehrere "Mischstellungen" aufweisen, in denen der heiße Luftstrom aus dem Heizkanal und der kühle Luftstrom aus dem Kühlkanal miteinander gemischt werden. Das Stellelement kann beispielsweise durch ein oder mehrere schwenkbar angeordnete Klappen gebildet sein. Selbstverständlich können auch andere Arten von Stell- bzw. Absperrelementen eingesetzt werden, wie z.B. absperrbare Luftleitgrills o.ä.

Die Luftleiteinrichtung kann ein in geeigneter Weise gestaltetes, zum Beispiel trichterförmiges Leitblech sein, das nahe an die zu heizende bzw. zu kühlenden Fahrzeugkomponenten, zum Beispiel an das Hinterachsgetriebegehäuse herangeführt ist.

Eine besonders effiziente Aufheizung der Luft im Heizkanal kann erreicht werden, wenn zumindest ein Teilabschnitt der Abgasanlage durch den Heizkanal hindurchläuft. Die Luft im Heizkanal umströmt dann unmittelbar die Abgasanlage.

Vorzugsweise sind am Eingang des Heizkanals und des Kühlkanals jeweils ein Luftsammelelement, zum Beispiel ein trichterförmiges Element oder ein schaufelförmiges Element angeordnet, welche den Fahrtwind kanalisieren und in den Heizkanal bzw. in den Kühlkanal leiten.

Vorzugsweise sind der Heizkanal und der Kühlkanal im Mitteltunnel des Unterbodenbereichs des Fahrzeugs angeordnet.

Im folgenden wird die Erfindung anhand eines Ausführungsbeispiels im Zusammenhang mit der Zeichnung näher erläutert. Es zeigen:
- Figur 1: einen Querschnitt durch den Kühlkanal und den Heizkanal;
- Figur 2: eine Prinzipskizze der Luftleitanordnung im Zustand "heizen"
- Figur 3: eine perspektivische Darstellung der Luftleitanordnung im Zustand "heizen";
- Figur 4: eine Prinzipskizze der Luftleitanordnung im Zustand "kühlen"; und
- Figur 5: eine perspektivische Darstellung der Luftleitanordnung im Zustand "kühlen".

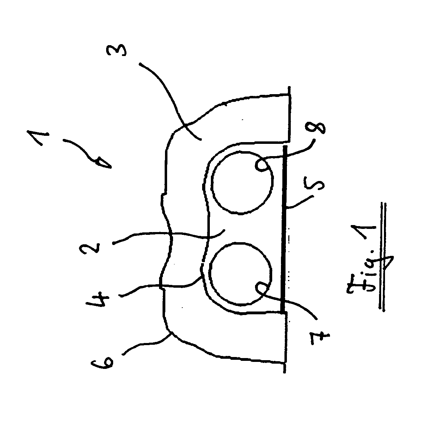

**Figur 1** zeigt einen Querschnitt durch eine Luftleitanordnung 1, die durch einen Heizkanal 2 und einen U-förmigen Kühlkanal 3 gebildet ist. Der Heizkanal 2 und der Kühlkanal 3 sind voneinander durch ein Trennblech 4 getrennt. Der Heizkanal 2 ist durch das Trennblech 4 und ein Abdeckblech 5 gebildet. Der Kühlkanal 3 ist durch das Trennblech 4 und ein Blech 6 gebildet, das zum Beispiel das Blech eines Mitteltunnels eines Fahrzeugs sein kann.

Im Heizkanal 2 verlaufen nebeneinander zwei Rohre 7, 8 der Abgasanlage. Die Rohre 7, 8 werden im Betrieb heiß und erhitzen somit die im Heizkanal 2 strömende Luft.

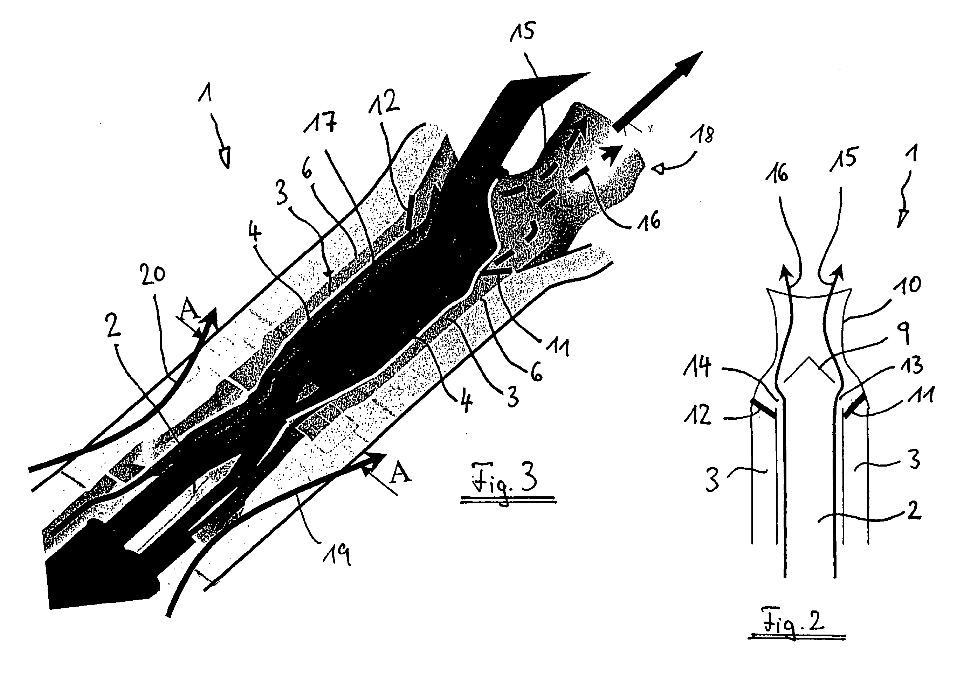

**Figur 2** zeigt das Grundprinzip der Erfindung in einer geschnittenen Draufsicht und zwar im Zustand "heizen". Zwischen den beiden Schenkeln des Kühlkanals 3 (vgl. Figur 1) erstreckt sich der Heizkanal 2. Im Bereich des hinteren Endes des Heizkanals 2 und des Kühlkanals 3 sind Bleche 9, 10 angeordnet, die als Luftleiteinrichtung fungieren und die die aus dem Heizkanal 2 bzw. aus dem Kühlkanal 3 nach hinten strömende Luft auf eine zu heizende bzw. zu kühlende Fahrzeugkomponente, zum Beispiel ein Hinterachsgetriebe (nicht dargestellt) leiten.

Ferner sind zwei Stellelemente 11, 12 vorgesehen, die hier schematisch als Klappen dargestellt sind. In der in **Figur 2** gezeigten Stellung der Klappen 11, 12 ist der Kühlkanal 3 gegenüber der durch die Bleche 9, 10 gebildeten Leiteinrichtung abgesperrt. Die Leiteinrichtung 10 steht in dieser Klappenstellung über zwei seitliche Öffnungen 13, 14 mit dem Heizkanal 2 in Strömungsverbindung. Somit kann bei der in **Figur 2** gezeigten Klappenstellung heiße Luft aus dem Heizkanal durch die Öffnungen 13, 14 zur Leiteinrichtung 10 und von dort zu einer zu heizenden Fahrzeugkomponente, zum Beispiel zum Hinterachsgetriebe strömen, was durch die beiden Pfeile 15, 16 angedeutet ist.

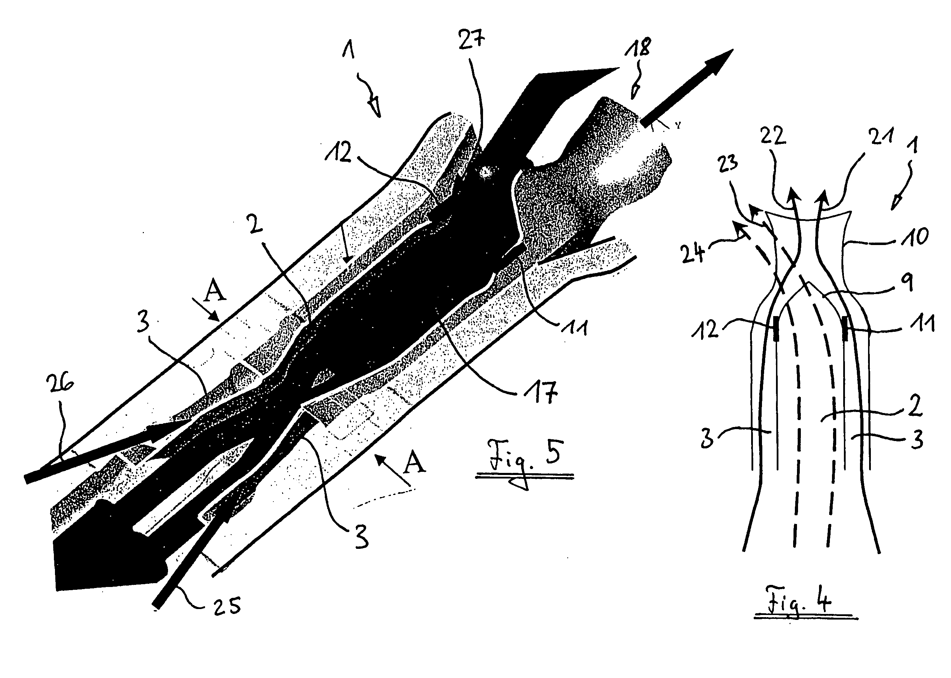

**Figur 3** zeigt eine perspektivische schematische Darstellung der Luftleitanordnung im Zustand "heizen". Deutlich zu sehen ist, dass die Auspuffanlage 17 im Heizkanal 2 angeordnet ist. Die von der Auspuffanlage abgegebene Wärme erhitzt die im Heizkanal 2 nach hinten strömende Luft, was schematisch durch die beiden Pfeile 15, 16 angedeutet ist. Die vom Heizkanal 2 kommende heiße Luft wird durch eine in Figur 3 nur schematisch dargestellt Luftleiteinrichtung 18 zum Hinterachsgetriebegehäuse geleitet.

Der durch das Trennblech 4 (vgl. Figur 1) und ein Bodenblech 6 gebildete Kühlkanal 3 ist durch die Klappen 11, 12 nach hinten, das heißt zur Luftleiteinrichtung 18 hin abgesperrt. Bei dieser Klappenstellung staut sich somit die kühle Luft im Kühlkanal 3, d.h. es tritt keine Luft in den Kühlkanal ein. Dies ist durch die Pfeile 19, 20 angedeutet.

Die in **Figur 3** dargestellte Schnittlinie A-A kennzeichnet übrigens in etwa die Lage der in Figur 1 gezeigten Schnittdarstellung.

**Figur 4** zeigt schematisch die Luftleitanordnung 1 im Zustand kühlen". In diesem Zustand befinden sich die Klappen 11, 12 in einer Stellung, in der der Kühlkanal 3 in Fluidverbindung mit der durch die Bleche 9, 10 gebildeten Luftleiteinrichtung steht. Somit kann kühle Luft aus dem Kühlkanal 3 zu einer zu kühlenden Fahrzeugkomponente, zum Beispiel einem Hinterachsgetriebe (nicht dargestellt) strömen, was durch Pfeile 21, 22 angedeutet ist. Der Heizkanal 2 ist hier durch die Klappen 11, 12 gegenüber der Luftleiteinrichtung bzw. dem Hinterachsgetriebe abgesperrt. Die heiße Luft aus dem Heizkanal kann jedoch über eine zum Beispiel seitlich angebrachte Öffnung (nicht dargestellt), die im Heizkanal 2 vorgesehen ist, zur Umgebung hin abströmen, was durch Pfeile 23, 24 dargestellt ist.

**Figur 5** zeigt eine perspektivische Darstellung der Luftleitanordnung 1 im Zustand kühlen. Die in den Kühlkanal 3 durch Pfeile 25, 26 angedeutete Luft kann an den Klappen 11, 12 vorbei über die Luftleiteinrichtung 18 zum Hinterachsgetriebe (nicht dargestellt) strömen. Die heiße Luft aus dem Heizkanal 2 hingegen strömt bei dieser Klappenstellung seitlich durch eine Öffnung 27 zur Umgebung hin ab.

## Patentansprüche

1. Luftleitanordnung (1), die im Unterbodenbereich eines Fahrzeugs angeordnet ist, mit
einem Heizkanal (2), in dem warme Luft strömt, die durch Abwärme eines Motors und/oder einer Abgasanlage (17) erwärmt ist,
einem Kühlkanal (3), in dem Umgebungsluft strömt, **dadurch gekennzeichnet, dass** der Kühlkanal (3) von dem Heizkanal (2) getrennt ist, die Luftleitanordnung weist
eine Luftleiteinrichtung (9, 10, 18), auf die derart angeordnet ist, dass Luft aus dem Heizkanal (2) und/oder aus dem Kühlkanal auf eine Fahrzeugkomponente lenkbar ist, welche in Abhängigkeit von ihrer Betriebstemperatur zu kühlen oder zu heizen ist, wobei
der Heizkanal und der Kühlkanal gegenüber der Luftleiteinrichtung (9, 10, 18) bzw. der Fahrzeugkomponente absperrbar sind.

2. Luftleiteinrichtung (1) nach Anspruch 1, wobei mindestens ein Stellelement (11, 12) vorgesehen ist, mit dem wahlweise der Heizkanal (2) oder der Kühlkanal (3) gegenüber der Luftleiteinrichtung (9, 10, 18) bzw. der Fahrzeugkomponente absperrbar ist.

3. Luftleiteinrichtung (1) nach Anspruch 1 oder 2, wobei der Heizkanal (2) und der Kühlkanal (3) durch eine Trennwand (4) voneinander getrennt sind, wobei sich der eine der beiden Kanäle (3) im Querschnitt gesehen zumindest um einen Teil des Umfangs des anderen Kanals (2) herum erstreckt.

4. Luftleitanordnung nach einem der Ansprüche 1 bis 3, wobei der Kühlkanal (3) im Querschnitt die Form eines U hat und der Heizkanal (2) zwischen den beiden Schenkeln des Kühlkanals (3) angeordnet ist.

5. Luftleitanordnung nach einem der Ansprüche 1 bis 4, wobei der Heizkanal (2) einen Auslass (27) zur Umgebung hin hat, der zumindest dann offen ist, wenn der Heizkanal (2) durch das mindestens eine Stellelement (11, 129 gegenüber der Luftleiteinrichtung (9, 10, 18) abgesperrt ist.

6. Luftleitanordnung nach einem der Ansprüche 1 bis 5, wobei eine Steuereinrichtung vorgesehen ist, die in Abhängigkeit von der Temperatur der Fahrzeugkomponente die Stellung des mindestens einen Stellelements (11, 12) steuert.

7. Luftleitanordnung nach einem der Ansprüche 1 bis 6, wobei das mindestens eine Stellelement (11, 12) zusätzlich zu den beiden Öffnungs- bzw. Schließstellungen mindestens eine dazwischenliegende Mischstellung aufweist, in der die Luftströme aus dem Heizkanal (2) und dem Kühlkanal (3) miteinander mischbar sind.

8. Luftleitanordnung nach einem der Ansprüche 1 bis 7, wobei das mindestens eine Stellelement (11, 12) durch eine schwenkbar angeordnete Klappe gebildet ist.

9. Luftleitanordnung nach einem der Ansprüche 1 bis 8, wobei die Fahrzeugkomponente ein Getriebe ist.

10. Luftleitanordnung nach einem der Ansprüche 1 bis 9, wobei die Fahrzeugkomponente ein Hinterachsgetriebe ist

11. Luftleitanordnung (1) nach einem der Ansprüche 1 bis 10, wobei die Luftleiteinrichtung (9, 10, 18) ein Leitblech ist, das bis nahe an die Fahrzeugkomponente herangeführt ist.

12. Luftleitanordnung (1) nach einem der Ansprüche 1 bis 11, wobei sich zumindest in einem Abschnitt des Heizkanals (2) ein Rohr (7, 8) der Abgasanlage (17) erstreckt, das von Luft, die im Heizkanal (2) strömt umströmt wird, wodurch sich die Luft im Heizkanal (2) erhitzt.

13. Luftleitanordnung (1) nach einem der Ansprüche 1 bis 12, wobei am Einlauf des Heizkanals (2) ein Luftsammelelement angeordnet ist, das warme Motorraumabluft sammelt und in den Heizkanal leitet.

14. Luftleitanordnung (1) nach einem der Ansprüche 1 bis 13, wobei am Einlauf des Kühlkanals (2) ein Luftsammelelement angeordnet ist, das Fahrtwind kanalisiert und in den Kühlkanal (3) leitet.

15. Luftleitanordnung (1) nach einem der Ansprüche 13 oder 14, wobei das Luftsammelelement trichterförmig gestaltet ist.

16. Luftleitanordnung nach einem der Ansprüche 13 oder 14, wobei das Luftsammelelement ein schaufelförmiges Element ist.

17. Luftleitanordnung (1) nach einem der Ansprüche 1 bis 16, wobei der Heizkanal (2) und der Kühlkanal (3) in einem Mitteltunnel des Unterbodens des Fahrzeugs angeordnet sind.

18. Fahrzeug mit einer Luftleitanordnung (1) nach einem der Ansprüche 1 bis 17.

## Claims

1. An air guide arrangement (1) disposed in the underbody region of a vehicle, comprising
a heating duct (2) in which air heated by the waste heat from an engine and/or an exhaust system (1 7) flows and
a cooling duct (3) in which ambient air flows,
**characterised in that**
the cooling duct (3) is separated from the heating duct (2),
the air guide arrangement comprises an air guide device (9, 10, 18) disposed so that air from the heating duct (2) and/or from the cooling duct can be directed on to a component of the vehicle for cooling or heating in dependence on its operating temperature, wherein
the heating duct and the cooling duct can be shut off from the air guide device (9, 10, 18) or the component of the vehicle.

2. An air guide device (1) according to claim 1, wherein at least one adjusting element (11, 12) is provided for optionally shutting off the heating duct (2) or the cooling duct (3) from the air guide device (9, 10, 18) or the component of the vehicle.

3. An air guide device (1) according to claim 1 or claim 2, wherein the heating duct and the cooling duct (3) are separated by a partition (4), wherein one of the two ducts (3) considered in cross-section extends round at least a part of the periphery of the other duct (2).

4. An air guide arrangement according to any of claims 1 to 3, wherein the cooling duct (3) has a U-shaped cross-section and the heating duct (2) is disposed between the two arms of the cooling duct (3).

5. An air guide arrangement according to any of claims 1 to 4, wherein the heating duct (2) has an outlet (27) to the environment, the outlet being open at least when the heating duct (2) is shut off from the air guide device (9, 10, 18) by the at least one adjusting element (11, 12).

6. An air guide arrangement according to any of claims 1 to 5, wherein a control device is provided and controls the position of the at least one adjusting element (11, 12) in dependence on the temperature of the component.

7. An air guide arrangement according to any of claims 1 to 6, wherein the at least one adjusting element (11, 12), in addition to the two opening or closing positions, has at least one intermediate mixing position in which the air flows from the heating duct (2) and the cooling duct (3) are mixed together.

8. An air guide arrangement according to any of claims 1 to 7, wherein the at least one adjusting element (11, 12) is a pivotable flap.

9. An air guide arrangement according to any of claims 1 to 8, wherein the vehicle component is a gear unit.

10. An air guide arrangement according to any of claims 1 to 9, wherein the vehicle component is a rear-axle gear unit.

11. An air guide arrangement (1) according to any of claims 1 to 10, wherein the air guide device (9, 10, 18) is a baffle plate extending nearly up to the vehicle component.

12. An air guide arrangement (1) according to any of claims 1 to 11, wherein a pipe (7, 18) of the exhaust system (17) extends in at least one portion of the heating duct (2) and is surrounded by air flowing in the heating duct (2), thus heating the air in the heating duct (2).

13. An air guide arrangement (1) according to any of claims 1 to 12, wherein an air collecting element is disposed at the inlet of the heating duct (2) and collects hot air from the engine chamber and directs it into the heating duct.

14. An air guide arrangement (1) according to any of claims 1 to 13, wherein an air collecting element is disposed at the inlet of the cooling duct (2) and channels the head wind and directs it into the cooling duct (3).

15. An air guide arrangement (1) according to claim 13 or claim 14, wherein the air collecting element is funnel-shaped.

16. An air guide arrangement (1) according to claim 13 or claim 14, wherein the air collecting element is a paddle-like element.

17. An air guide arrangement (1) according to any of claims 1 to 16, wherein the heating duct (2) and the cooling duct (3) are disposed in a central tunnel in the underbody of the vehicle.

18. A vehicle equipped with an air guide arrangement (1) according to any of claims 1 to 17.

## Revendications

1. Dispositif de guidage d'air (1), disposé dans la zone du plancher d'un véhicule, avec
un canal de chauffage (2), dans lequel circule de l'air chaud, qui est chauffé par la chaleur perdue d'un moteur et/ou d'un échappement (17), et
un canal de refroidissement (3), dans lequel circule d'air ambiant,
**caractérisé en ce que**
le canal de refroidissement (3) est séparé du canal de chauffage (2), le dispositif de guidage d'air présente un organe de guidage d'air (9, 10, 18) disposé pour diriger l'air du canal de chauffage (2) et/ou du canal de refroidissement sur un organe du véhicule qui doit être refroidi ou chauffé en fonction de sa température de fonctionnement, le canal de chauffage et le canal de refroidissement pouvant être bloqués vis-à-vis de l'organe de guidage d'air (9, 10, 18) ou de l'organe du véhicule.

2. Dispositif de guidage d'air (1) selon la revendication 1,
dans lequel on prévoit au moins un élément de réglage (11, 12), permettant de bloquer au choix le canal de chauffage (2) ou le canal de refroidissement (3) vis-à-vis de l'organe de guidage d'air (9, 10, 18) ou de l'organe du véhicule.

3. Dispositif de guidage d'air (1) selon la revendication 1 ou 2,
dans lequel le canal de chauffage (2) et le canal de refroidissement (3) sont séparés l'un de l'autre par une paroi de séparation (4), et l'un des deux canaux (3), vu en coupe, s'étend au moins autour d'une partie du pourtour de l'autre canal (2).

4. Dispositif de guidage d'air selon l'une quelconque des revendications 1 à 3,
dans lequel le canal de refroidissement (3) a en coupe la forme d'un U et le canal de chauffage (2) est disposé entre les deux branches du canal de refroidissement (3).

5. Dispositif de guidage d'air (1) selon l'une quelconque des revendications 1 à 4,
dans lequel le canal de chauffage (2) a une sortie (27) dans l'atmosphère, qui est ouverte au moins si le canal de chauffage (2) est bloqué par au moins un élément de réglage (11, 12) vis-à-vis de l'organe de guidage d'air (9, 10, 18).

6. Dispositif de guidage d'air (1) selon l'une quelconque des revendications 1 à 5,
dans lequel un organe de commande, en fonction de la température des organes du véhicule, commande la position d'au moins un élément de réglage (11, 12).

7. Dispositif de guidage d'air (1) selon l'une quelconque des revendications 1 à 6,
dans lequel au moins un élément de réglage (11, 12) présente en plus des positions d'ouverture ou de fermeture, au moins une position mixte qui se trouve entre elles, dans laquelle les courants d'air du canal de chauffage (2) et du canal de refroidissement (3) peuvent se mélanger l'un à l'autre.

8. Dispositif de guidage d'air (1) selon l'une quelconque des revendications 1 à 7,
dans lequel au moins un élément de réglage (11, 12) est formé par un volet pivotant.

9. Dispositif de guidage d'air (1) selon l'une quelconque des revendications 1 à 8,
dans lequel l'organe du véhicule est une boîte de vitesses.

10. Dispositif de guidage d'air (1) selon l'une quelconque des revendications 1 à 9,
dans lequel l'organe du véhicule est un pont arrière.

11. Dispositif de guidage d'air (1) selon l'une quelconque des revendications 1 à 10, dans lequel l'organe de guidage d'air (9, 10, 18) est un déflecteur, amenant l'air jusqu'à proximité de l'organe du véhicule.

12. Dispositif de guidage d'air (1) selon l'une quelconque des revendications 1 à 11,
dans lequel au moins dans un tronçon du canal de chauffage (2), s'étend un tube (7, 8) de l'échappement (17), qui est entouré par l'air qui circule dans le canal de chauffage (2), ce qui réchauffe l'air dans le canal de chauffage (2) .

13. Dispositif de guidage d'air (1) selon l'une quelconque des revendications 1 à 12,
dans lequel, à l'entrée du canal de chauffage (2), un élément collecteur d'air canalise le vent relatif et le conduit dans le canal de chauffage.

14. Dispositif de guidage d'air (1) selon l'une quelconque des revendications 1 à 13,
dans lequel, à l'entrée du canal de refroidissement (3), un élément collecteur d'air canalise le vent relatif et le conduit dans le canal de refroidissement (3).

15. Dispositif de guidage d'air (1) selon l'une quelconque des revendications 13 ou 14, dans lequel l'élément collecteur d'air a la forme d'une trémie.

16. Dispositif de guidage d'air (1) selon l'une quelconque des revendications 13 ou 14,
dans lequel l'élément collecteur d'air est un élément en forme de pale.

17. Dispositif de guidage d'air (1) selon l'une quelconque des revendications 1 à 16,
dans lequel le canal de chauffage (2) et le canal de refroidissement (3) sont dans un tunnel du plancher du véhicule.

18. Véhicule avec un dispositif de guidage d'air (1) selon l'une quelconque des revendications 1 à 17.
